(19) **Europäisches Patentamt**
**European Patent Office**
**Office européen des brevets**

(11) **EP 3 882 815 B1**

(12) **EUROPEAN PATENT SPECIFICATION**

(45) Date of publication and mention
of the grant of the patent:
**09.08.2023 Bulletin 2023/32**

(21) Application number: **21157127.8**

(22) Date of filing: **15.02.2021**

(51) International Patent Classification (IPC):
*G06V 20/58* (2022.01)    *G06V 20/56* (2022.01)
*G01S 13/931* (2020.01)    *G01S 17/931* (2020.01)
*G08G 1/16* (2006.01)

(52) Cooperative Patent Classification (CPC):
**G01S 13/931; G01S 17/931; G06V 20/58;**
**G06V 20/588;** G01S 2013/9323; G01S 2013/93271;
G08G 1/165; G08G 1/166

(54) **METHOD FOR GENERATING A DYNAMIC GRID**

VERFAHREN ZUR ERZEUGUNG EINES DYNAMISCHEN GITTERS

PROCÉDÉ DE GÉNÉRATION D'UN RÉSEAU DYNAMIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.03.2020 EP 20164443**

(43) Date of publication of application:
**22.09.2021 Bulletin 2021/38**

(73) Proprietor: **Aptiv Technologies Limited**
**St. Michael (BB)**

(72) Inventors:
• **LILJA, Adam Mats John**
**41323 Gothenburg (SE)**
• **CARLANDER, Markus**
**42532 Hisings-Kärra Gothenburg (SE)**

(74) Representative: **Manitz Finsterwald**
**Patent- und Rechtsanwaltspartnerschaft mbB**
**Martin-Greif-Strasse 1**
**80336 München (DE)**

(56) References cited:
**US-A1- 2015 353 083**    **US-A1- 2016 116 916**

• **JUNGNICKEL RUBEN ET AL: "Efficient automotive grid maps using a sensor ray based refinement process", 2016 IEEE INTELLIGENT VEHICLES SYMPOSIUM (IV), IEEE, 19 June 2016 (2016-06-19), pages 668-675, XP032939037, DOI: 10.1109/IVS.2016.7535459 [retrieved on 2016-08-05]**
• **JOUBERT DANIEK ET AL: "Pose Uncertainty in Occupancy Grids through Monte Carlo Integration", JOURNAL OF INTELLIGENT AND ROBOTIC SYSTEMS, KLUWER DORDRECHT, NL, vol. 77, no. 1, 17 August 2014 (2014-08-17), pages 5-16, XP035410667, ISSN: 0921-0296, DOI: 10.1007/S10846-014-0093-Y [retrieved on 2014-08-17]**
• **FELIX KUNZ ET AL: "Fast Collision Checking with a Frenet Obstacle Grid for Motion Planning", 10. WORKSHOP FAHRERASSISTENZSYSTEME - FAS 2015, 28 September 2015 (2015-09-28), pages 95-104, XP055725440, Walting im Altmühltal ISBN: 978-3-00-050746-5 & NUSS DOMINIK ET AL: "Consistent environmental modeling by use of occupancy grid maps, digital road maps, and multi-object tracking", 2014 IEEE INTELLIGENT VEHICLES SYMPOSIUM PROCEEDINGS, IEEE, 8 June 2014 (2014-06-08), pages 1371-1377, XP032620202, DOI: 10.1109/IVS.2014.6856516**

**Description**

FIELD

The present disclosure relates to a method for generating a dynamic grid in front of a host vehicle.

BACKGROUND

Advanced driver assistance systems (ADAS) have been developed to support drivers in order to drive a host vehicle more safely and comfortably. In order to perform properly and due to safety reasons, the environment in front of the host vehicle needs to be monitored e.g. in order to determine a collision free space in a lane in front of the host vehicle.

For representing the perception of the environment in front of the host vehicle, in many cases a grid of cells is defined for a specific area in front of the vehicle, and for each cell some attributes may be determined, e.g. if it is occupied, partly occupied, occluded or free. The grid of cells is usually designed on the basis of a vehicle coordinate system wherein all cells of the grid have the same size and the same orientation within this coordinate system. That is, regarding the vehicle coordinate system the cells of conventional grids are invariant regarding position and time.

In addition, the conventional grid includes the same number of cells in both lateral and longitudinal directions with respect to the movement of the host vehicle. In order to guarantee a collision free space in front of the host vehicle, the number of cells may further be dynamically increased in lateral direction, especially if a strong curvature of the lane occurs in front of the host vehicle. Hence, such a square or rectangular grid has to include a huge number of cells which need to be processed by a processor and a memory of a vehicle controlling system.

An actual region of interest, however, which is relevant e.g. for the assistance systems of the host vehicle, usually covers a part of a square or rectangular grid only. For example, the region of interest may include the lane in which the host vehicle is currently driving and small areas located on the right and left sides of such a lane.

Therefore, the conventional grid usually includes a lot of unnecessary cells providing a lot of unnecessary data which are not relevant for the systems of the host vehicle, especially if such a lane has quite a strong curvature. These unnecessary data waste a lot of memory and may slow down processors of the vehicle controlling system.

Moreover, there may be driving situations of the host vehicle in which it is desirable to increase or decrease the resolution of the grid within certain areas of the region of interest. For example, if certain entities or objects are identified within the region of interest in front of the host vehicle, e.g. boundaries of a free space, road barriers or other obstacles, the number of grid cells should be increased close to these entities or objects, whereas the number of cells could be reduced in areas having some distance with respect to these entities or objects, e.g. in the center of a free space or beyond a road barrier or static object. By increasing or decreasing the resolution of the grid in certain areas, the performance of some assistance systems could be improved since grid-based data and information could be adapted in a better way to the actual requirements prescribed by the environment and by the driving situation of the host vehicle.

US 2015/0353083 A1 discloses a method comprising the features according to the preamble of claim 1.

Jungnickel, R. et al.: "Efficient Automotive Grid Maps using a Sensor Ray based Refinement Process", 2016 IEEE Intelligent Vehicles Symposium (IV), IEEE, June 19, 2016, pages 668-675, discloses a method for efficiently generating automotive grid maps which comprises splitting and merging of cells of the grid map according to a classification and a valuation of the respective cells.

Accordingly, there is a need to have a method for generating a dynamic grid whose shape and resolution can be adapted to the current environment of a host vehicle.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for generating a dynamic grid in front of a host vehicle. According to the method, an indicator is detected for the course of a lane of a road in front of the host vehicle via a detection system of the host vehicle, and a base area is determined based on the detected indicator via a computer system of the host vehicle, wherein the base area is restricted to a region of interest in front of the host vehicle. A plurality of cells is defined via the computer system by dividing the base area in order to form the dynamic grid.

Furthermore, qualifying data relating to the base area are received via the detection system. Via the computer system, a valuation is determined for each cell based on the qualifying data, and for each cell it is decided based on the valuation whether the respective cell is to be split or to be merged with an adjacent cell. Based on this decision, the respective cell is modified by splitting the cell or by merging the cell with at least one adjacent cell via the computer system, or the respective cell is left unmodified.

The detection system of the host vehicle may include a visual system, a radar system and/or a Lidar system, whereas the computer system may include a processor and a memory. Since the base area is determined based on the indicator for the course of the lane, the base area which defines the dimensions and the number of the cells of the grid covers the region of interest in front of the vehicle only, i.e. including the lane and certain areas on the right and left sides of the lane. Therefore, the lateral size of the grid, i.e. perpendicular to the course of the lane, is decreased in comparison to a static grid having a constant number of cells and constant longitudinal and lateral extensions. This leads to a lower number of cells for the dynamic grid. Hence, less memory is required for the dynamic grid reflecting the course of the lane, and the number of calculations needed for processing data based on the dynamic grid is reduced.

The qualifying data may be determined via one or more sensors of the detection system and are therefore related to the perception of the environment of the host vehicle within the base area, i.e. in the region of interest in front of the host vehicle. For example, the qualifying data may refer to boundaries of a free space or to coordinates of obstacles in a vehicle coordinate system.

The valuation for each cell is intended to determine the importance of the respective cell e.g. for driver assistance systems which rely on a grid-based representation for the perception of the environment in front of the host vehicle. The valuation may be defined as a function depending from the qualifying data. For example, the valuation may depend on the distance of the respective cell to obstacles within the base area, wherein these distances may be derived from the qualifying data. A cell belonging e.g. to a center of a free space in front of the host vehicle may therefore obtain another valuation than a further cell which is closer to a boundary of the free space.

Based on the valuation for each cell of the dynamic grid, the resolution of the grid may be increased in certain areas within the region of interest by splitting the cells within this area, and the resolution of the grid may be decreased in other areas within the region of interest by merging adjacent cells. Since the available memory within the computer system is usually limited, a maximum number of cells may be predefined for the dynamic grid. As a consequence, the splitting of cells may be stopped or prioritized based on the qualifying data if the maximum number of cells is going to be exceeded. However, due to the validation of the cells before actually performing splitting or merging, it may be prevented to reach the maximum number of cells in practice.

Due to the flexible adaption of the resolution of the grid, the grid is adjusted to the entities which are currently present in the environment of the vehicle, i.e. in the region of interest. Therefore, the performance of so-called downstream functions is improved which rely on a grid-based perception of the environment of the vehicle. An example is trajectory planning as a part of a driver assistance system.

The qualifying data comprises a plurality of data sets, and each data set provides a contribution to the valuation of the respective cell. For example, the plurality of data sets may include coordinates of at least one of: boundaries of a free space, road barriers, static objects, object trails and boundaries between different drivability classifications.

Therefore, each data set may be related to a certain type of entities and their location within the base area or the region of interest in front of the host vehicle. The decision whether to split a cell or to merge the cell with at least one adjacent cell may therefore depend on the types of entities which may be present within the base area. In other words, each data set may provide a "vote" for the decision whether to modify the respective cell, i.e. by splitting or merging, or to leave the cell unmodified. In addition, the adaption of the grid and its resolution to the environment of the vehicle may be improved by considering more than one type of entities within the base area since at least two data sets may be considered.

At least one of the data sets includes a classification of the respective cell, and a plurality of split types is defined for the cells of the grid. One of the split types is selected for the respective cell if two subcells which are generated according to the respective split type have different classifications. In other words, for each cell it is tested in advance whether splitting the cell according to a certain scheme will lead to two cells having different classifications. For example, the classifications may include "free", "occupied" and "unknown". Furthermore, the split types comprise vertical splitting, horizontal splitting, diagonal splitting from top left to bottom right, and diagonal splitting from top right to bottom left of the respective cell. One of these split types may be selected if after the splitting one part of the cell or "subcell" will be e.g. "free", while the other part will be "occupied" or "unknown". Therefore, the best split type is selected if it is decided according to the method that the cell is to be split, and an optimal adaption of the grid to the respective entity in the base area is achieved.

The contribution of each data set may include a proposed modification type for the respective cell. That is, the modification type for each cell may be proposed when considering the respective data set before the valuation for the respective cell is determined. The decision whether to split the cell or to merge the cell with adjacent cells may therefore be taken based on the proposed modification types only. This may facilitate the decision.

Moreover, deciding whether the respective cell is to be split or to be merged with an adjacent cell may be based on a sum over all available contributions of the data sets. Since all available contributions are considered, the flexibility and adaptability of the grid may again be enhanced. However, a certain type of entities and the corresponding data set may be prioritized when determining the sum over all available contributions by assigning a higher weight to this specific data set.

Moreover, the vertical splitting may have a higher priority than the further split types, i.e. than horizontal or diagonal splitting. In many practical cases, an increased lateral resolution may be more important than an increased longitudinal resolution with respect to the host vehicle, and this may be reflected by the higher priority of the vertical splitting. Furthermore, horizontal or lateral splitting may have a higher priority than diagonal splitting. In summary, a ranking for selecting the split type may be defined in that vertical splitting is first, horizontal splitting is second, followed by diagonal splitting - but only if the respective split type is suitable in light of the further conditions as defined by the data sets.

According to an embodiment, adjacent cells may be merged only if they have the same classification. Regardless of further data sets which may not include any classification, merging of adjacent cells is performed only if their classification matches. By this means, an unreasonable merging of adjacent cells may be prevented. Furthermore, adjacent cells may be merged in a lateral direction with respect to the host vehicle only. Introducing unnecessary discretization errors may therefore be prevented by refraining from longitudinal merging.

According to a further embodiment, the valuation may be based on a distance of the respective cell with respect to the host vehicle. For example, cells being closer to the host vehicle may have a higher priority regarding splitting than cells having a greater distance to the host vehicle. Hence, a high resolution of the grid may be achieved in the area close to the host vehicle.

Splitting of the respective cell may be selected if the valuation allows for splitting the respective cell and for merging the respective cell with an adjacent cell at the same time. In other words, splitting a cell may always have a higher priority than merging adjacent cells. This may prevent any unreasonable reduction of the grid resolution.

According to a further embodiment, a reference line may be defined via the computer system along the lane based on the indicator, and the base area may be determined on both sides of the reference line. The reference line may be divided into segments, and for each of the segments, a respective row of cells may be defined perpendicularly to the reference line.

The definition of the reference line, for example in the middle of the lane, may be used for a straightforward adaptation of the base area to the course of the lane which is given by the indicator. Since the indicator may be measured e.g. by the detection system of the host vehicle, the reference line may be a straightforward means in order to "dynamically deform" the base area such that it reflects the course of the lane. Furthermore, the reference line may be represented by a polyline being adapted to measured indicator data. The use of such a reference line may further reduce the computational effort which is required to perform the method.

If the reference line consists of a certain number of segments, an update of the dynamic grid may be simplified. For such an update of the grid, most of the segments and the respective row of cells belonging to these segments may be maintained, and merely the segments and corresponding cells being close to the host vehicle may be replaced by new segments and corresponding cells at the "far end" of the reference line with respect to the host vehicle. Furthermore, generating the dynamic grid may be facilitated by defining rows of cells corresponding to the segments of the reference line.

In another aspect, the present disclosure is directed at a system comprising a detection system and a computer system, said system being configured to carry out the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM); a flash memory; or the like. Furthermore, the computer readable medium may be configured as a data storage that is accessible via a data connection, such as an internet connection. The computer readable medium may, for example, be an online data repository or a cloud storage.

DRAWINGS

Exemplary embodiments and functions of the present disclosure are described herein in conjunction with the following drawings, showing schematically:

Fig. 1    depicts a schematic representation of a dynamic grid following the course of a lane,
Fig. 2    depicts how the dynamic grid is generated,
Fig. 3    depicts a scheme for providing and storing grid information,
Fig. 4    depicts a scheme for relating cell coordinates to the grid information,

Fig. 5        depicts an overview of a dynamic grid including a drivability classification,

Fig. 6        depicts a general example for splitting cells of a dynamic grid,

Fig. 7        depicts an example for vertical splitting,

Fig. 8        depicts an example for increasing the grid resolution close to a road barrier,

Fig. 9        depicts an example for horizontal splitting,

Fig. 10      depicts an example for diagonal splitting,

Fig. 11      depicts a scheme for selecting the best split type,

Fig. 12      depicts a diagram for deciding whether the grid resolution is to be changed, and

Fig. 13      depicts an example for splitting or merging selected grid cells.

DETAILED DESCRIPTION

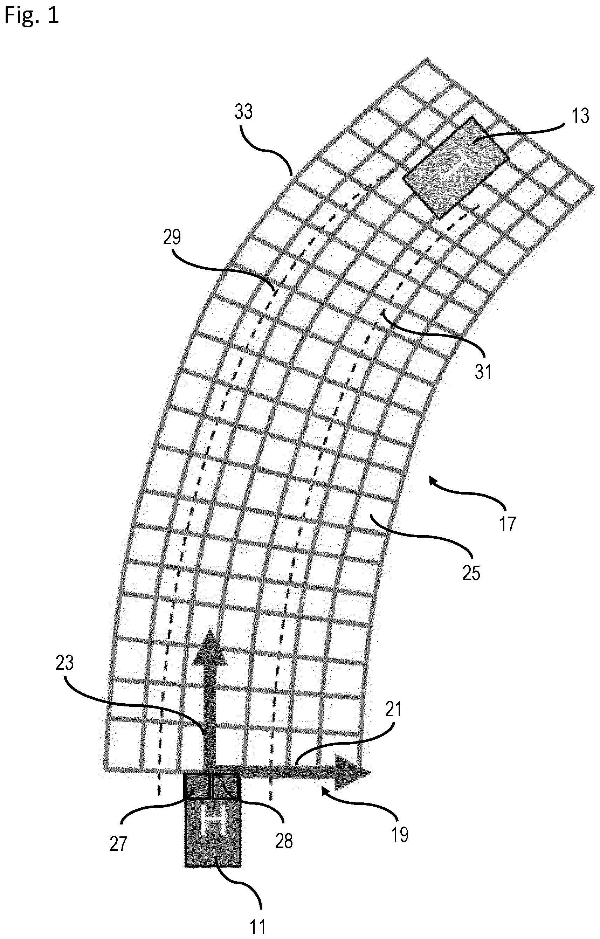

Fig. 1 schematically depicts a host vehicle 11 and a target vehicle 13 driving in the same lane 15 in front of the host vehicle 11. Fig. 1 further depicts a schematic representation of a dynamic grid 17 which is defined with respect to a vehicle coordinate system 19 which is a Cartesian coordinate system including an x-axis 21 extending in a lateral direction with respect to the vehicle 11 and a y-axis 23 extending in a longitudinal direction in front of the host vehicle 11. The dynamic grid 17 includes a plurality of cells 25 which are generated as will be described below.

The position of the target vehicle 13 is detected by a detection system 27 of the host vehicle 11. The detection system 27 includes a visual system and/or a radar system and/or a Lidar system. The detection system 27 is also configured to detect a left margin 29 and a right margin 31 of the lane 15. The host vehicle 11 further includes a computer system 28 which includes a processor and a memory and which is configured to generate the dynamic grid 17. A region of interest which is relevant for the host vehicle 11 includes a portion of the lane 15 in front of the host vehicle and some area beyond the left margin 29 and the right margin 31 within the close vicinity of the lane 15.

The dynamic grid 17 is adapted to the course of the lane 15 in front of the host vehicle 11. In detail, the dynamic grid 17 is defined via the computer system 28 of the host vehicle 11 for a base area 33 which corresponds to the region of interest in front of the host vehicle 11. In order to define the base area 33, the left margin 29 and the right margin 31 of the lane 15 are detected by the detection system 27 of the host vehicle 11. Since the left margin 29 and the right margin 31 limit the lane 15, the left and right margins 29, 31 are used as indicators for the course of the lane 15 in front of the host vehicle 11.

As mentioned above, the base area 33 for the dynamic grid 17 is intended to cover the region of interest for the host vehicle 11. For covering this region of interest properly, some areas beyond the left margin 29 and beyond the right margin 31 are included in the base area 33. That is, some parts of adjacent lanes, sidewalks and/or further environment like ditches may also be relevant for the further movement of the host vehicle 11 and have therefore to be included into the base area 33. The base area 33 is further divided in a plurality of dynamic cells 25 in order to generate the dynamic grid 17.

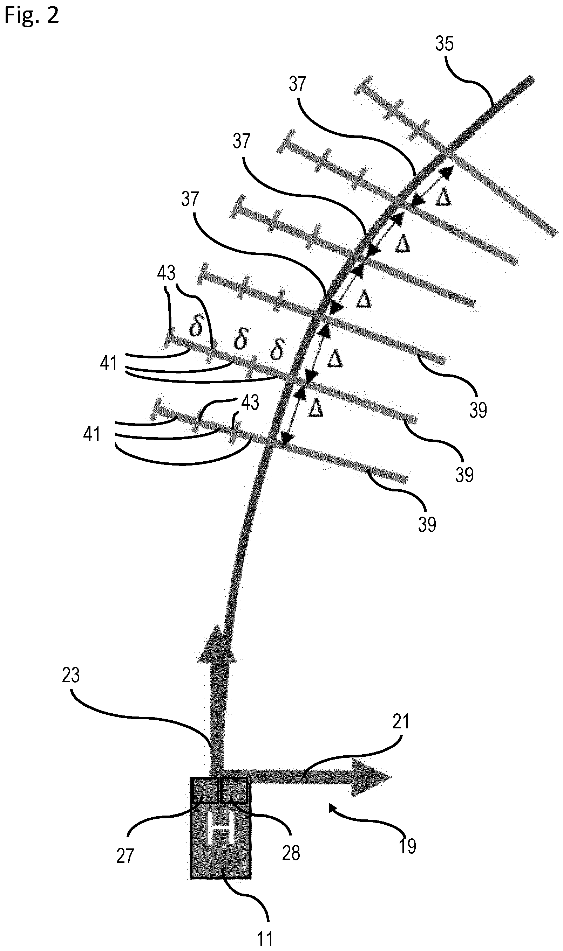

Fig. 2 depicts in detail how the dynamic cells 25 of the dynamic grid 17 are generated via the computer system 28 of the host vehicle 11. A reference line 35 is defined which extends approximately in the center of the lane 15 in which the host vehicle 11 and the target vehicle 13 are driving momentarily. The reference line 35 is represented by a polynomial whose coefficients are derived from an indicator for the course of the lane 15 which is measured by the detection system 27 of the host vehicle 11, e.g. by measuring the course of the left margin 29 and the right margin 31 of the lane 15 as indicators for the course of the lane 15.

The reference line 35 represented by the polynomial is divided into a plurality of segments 37 having a constant length $\Delta$ along the reference line 35. For each segment 37, two straight lines 39 are defined extending perpendicularly to the reference line 35, respectively. That is, adjacent segments 37 have a common straight line 39 which delimits respective areas from each other which extend on both sides of the reference line 35 between the straight lines 39. The straight lines 39 are further divided into sections 41 having a constant length $\delta$. Therefore, end points 43 of the respective sections 41 also have a constant distance $\delta$ from each other.

The end points 43 of the sections 41 are used in order to define corners or vertices for a respective dynamic cell 25 (see Fig. 1). In detail, two end points 43 of a section 41 being adjacent to each other and belonging to a first straight line 39 define two vertices of a dynamic cell 25, whereas two further end points 43 of a section 41 of the adjacent straight line 39 having the shortest distances to the first straight line 39 define two further vertices for the dynamic cell 25. That is, the four vertices of each dynamic cell 25 are defined by respective end points 43 of sections 41 belonging to adjacent straight lines 39 and having the shortest distance with respect to each other.

Due to the curvature of the reference line 35, the size of the dynamic cells 25 varies within the dynamic grid 17, as can be recognized in Fig. 1. In addition, the length of the segments 37 may be varied as an alternative along the reference line 35. For example, close to the host vehicle 11 a short length of the segments 37 may be used, whereas the length of the segments 37 may increase when their distance increases with respect to the host vehicle 11.

In the example as shown in Fig. 2, each segment 37 defines a row of dynamic cells 25, wherein this row extends perpendicularly to the reference line 35. If a predefined number of cells 25 is used for each row of cells 25 belonging to a certain segment 37, a constant lateral width of the dynamic grid 17 is defined corresponding to a constant lateral extension of the base area 33 corresponding to and covering the region of interest in front of the host vehicle 11.

Alternatively, the number of cells 25 for each row may be adjusted to the curvature of the lane 15 and of the reference line 35. In detail, a greater number of cells 25 may be considered on a first side to which the reference line 35 is curved, e.g. on the right side as shown in Figs. 1 and 2, whereas a smaller number of cells 25 is considered on the second side from which the reference line 35 departs. Such a situation is shown in Fig. 1 in which more cells 25 are present at the "inner side" of the lane 15 beyond the right margin 31, whereas less cells 25 are considered at the "outer side" of the left margin 29 of the lane 15.

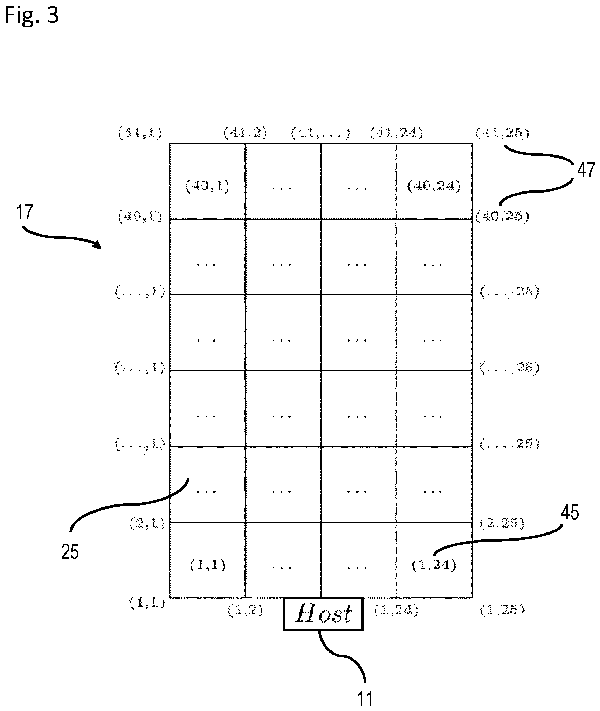

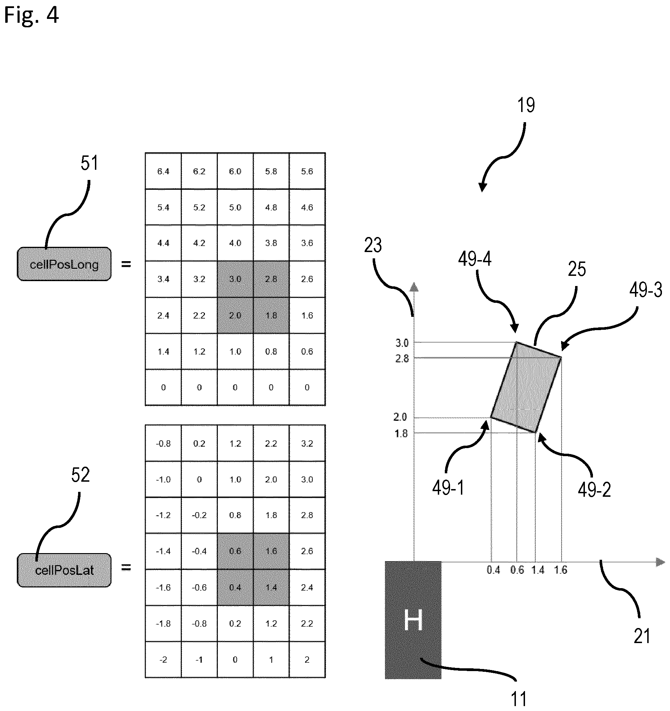

For the dynamic grid as shown in Fig. 1, however, a constant number of cells is assumed for each row and for each column, i.e. in longitudinal direction as well as in lateral direction, although the dynamic grid is adapted to the course of the lane 15 according to the scheme as shown in Fig. 2. For such a dynamic grid 17, relevant information is provided and stored in the memory of the computer system 28 according to a scheme as shown in Figs. 3 and 4.

According to Fig. 3, the dynamic grid 17 in front of the host vehicle 13 includes cells 25 to each of which cell indices 45 are assigned. The cell indices 45 include a first index relating to the longitudinal direction and a second index relating to the lateral direction with respect to the host vehicle 13. In the example of Fig. 3, the grid 17 includes forty rows of cells 25 in the longitudinal direction and twenty-four columns of cells 25 in the lateral direction.

In addition, vertex indices 47 are defined for the grid 17. The vertex indices 47 also include a first index for the longitudinal direction and a second index for the lateral direction with respect to the host vehicle 13. Each cell includes four corners or vertices 49 (see Fig. 4). Therefore, the grid 17 includes vertex indices 47 having fortyone first indices and twenty-five second indices for the example as shown in Fig. 3. Although the grid 17 is depicted in Fig. 3 as including square cells 25 only, it is noted that the dynamic grid 17 is actually adapted to the course of the lane 15 as shown in Figs. 1 and 2, and therefore each of the cells 25 has four vertices 49 being connected by a polyline which does not form a rectangle . That is, the angle at most of the vertices 49 is not a right angle, as can be easily recognized e.g. in Fig. 1.

In Fig. 4, a further scheme is depicted for identifying the location of a respective cell 25 and storing information regarding this location in the memory of the computer system 28. In detail, the coordinates of four vertices 49-1, 49-2, 49-3 and 49-4 of the cell 25 are stored. The coordinates are defined in the vehicle coordinate system 19 and therefore include one coordinate along the x-axis 21 or lateral direction and another coordinate along the y-axis 23 or longitudinal direction. For each vertex 49, the respective coordinate along the longitudinal axis is stored in a matrix 51 for longitudinal positions, whereas the coordinate along the lateral direction is stored in a matrix 52 for the lateral position.

In order to identify the position of a specific cell 25, the respective vertex indices 47 need to be known which belong to the specific cell 25. Each of the vertex indices 47 as shown in Fig. 3 is assigned to one of the elements of the matrix 51 for the longitudinal position and of the matrix 52 for the lateral position, respectively. For the example as shown in Fig. 4, the vertex indices for the four vertices 49-1, 49-2, 49-3 and 49-4 are (3,3), (3,4), (4,4) and (4,3) in accordance with Fig. 3. Due to the assignment of the vertex indices 47 to the matrices 51, 52, the respective coordinates of the vertices 49 of the specific cell 25 as shown in Fig. 4 are (0.4, 2.0), (1.4, 1.8), (1.6, 2.8) and (0.6, 3.0) in the vehicle coordinate system 19.

Although the dynamic grid 17 as shown in Fig. 1 is a dynamic grid following the course of the lane 15, the resolution of the grid 17 as shown in Fig. 1 is almost constant for the base area 33 or region of interest in front of the host vehicle 11. The mean number of cells per area is constant except for small deviations due to slight changes of the cell size e.g. if the dynamic grid 17 is adapted to a corner within the lane 15.

It is desirable, however, to increase the resolution of the dynamic grid 17 locally in certain areas within the base area 33, e.g. close to boundaries of different kinds of obstacles. On the other hand, it might be desirable to reduce the resolution of the dynamic grid 17 in certain areas which e.g. are regarded as non-critical for drivability, like areas in the center of a free space. The resolution of the dynamic grid 17 can be modified by splitting or merging existing cells 25, as will be explained in the following.

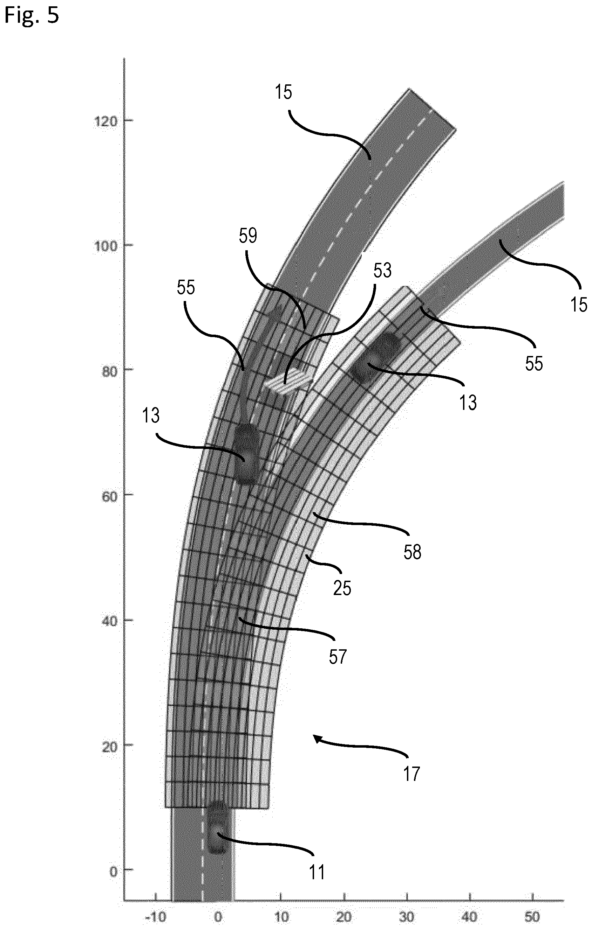

The need for changing the resolution of the dynamic grid 17 is illustrated in the overview as depicted in Fig. 5. In front of the host vehicle 11, a dynamic grid 17 comprising a plurality of cells 25 is shown. In front of the host vehicle 11, target vehicles 13 and a road barrier 53 are detected via the detection system 27 (see Figs. 1 and 2) of the host vehicle 11. In addition, a trail or trajectory of the target vehicles 13 and the boundaries of the lanes 15 are also identified via the detection system 27.

For each of the plurality of cells 25 within the grid 17, it is determined whether an object or obstacle detected by the detection system 27 is present or not. In other words, it is determined for each cell 25 whether it is occupied by an obstacle or object. For the examples as shown in Figs. 1 and 5, the cells 25 which are covered at least partly by the target vehicle 13 or by the road barrier 53 are regarded as occupied. Based on the result of aforementioned detections and identifications, the cells 25 of the dynamic grid 17 are classified as drivable cells 57, non-drivable cells 58 and unknown cells 59 (beyond the road barrier 53) which are located in corresponding areas within the dynamic grid 17.

For the specific driving situation as shown in Fig. 5, it would be desirable to increase or decrease the resolution of the dynamic grid 17 in specific areas, e.g. close to the target vehicles 13 and close to the road barrier 53 in order to improve e.g. a grid-based trajectory planning for the host vehicle 11.

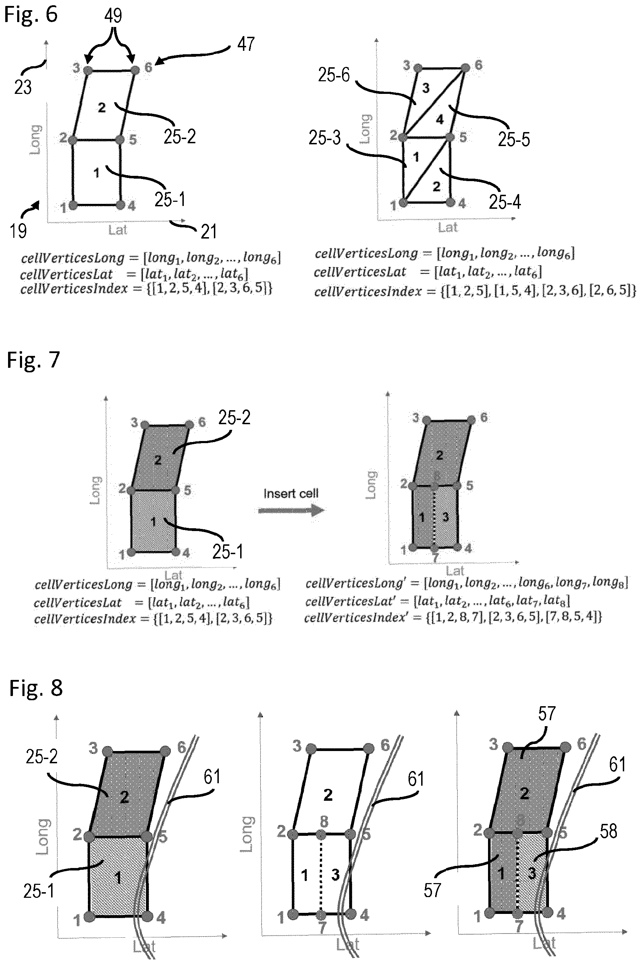

In order to modify the resolution of the dynamic grid 17, an advanced scheme for defining and storing cells 25 of a grid 17 is depicted in Figs. 6 and 7, wherein the cells 25 may have different shapes, and different amounts of cells may be provided in longitudinal and lateral direction. First, an unordered set of vertices 49 is generated which follows the course of a lane 15 as illustrated in Figs. 1 and 2. In Fig. 6, the vertices 49 are labelled by the numbers from 1 to 6 as vertex indices 47, and their coordinates along the longitudinal and lateral axis with respect to the vehicle coordinate system 19 are given as $long_1$, $long_2$, ..., longs and $lat_1$, $lat_2$, ..., late, respectively, and stored in respective vectors which are explicitly listed in the respective first two rows below the respective diagram of Figs. 6 and 7. For Figs. 6 to 11, the lateral or x-axis 21 and the longitudinal or y-axis 23 of the vehicle coordinate system 19 are denoted by "Lat" and "Long", respectively.

For defining cells 25 which have different shape and different size, the vertex indices 47 are grouped in a certain manner which indicates how to connect the respective vertices 49. For the left diagram of Fig. 6, two cells 25-1 and 25-2 are generated by grouping respective four of the six vertices, i.e. as 1-2-5-4 and 2-3-6-5 in order to indicate how the four vertices 49 have to be connected in order to generate the respective cell 25-1, 25-2. In contrast, the same vertices 1 to 6 are grouped in a different manner on the right side of Fig. 6 in order to create four triangular cells or "subcells" 25-3, 25-4, 25-5 and 25-6. The groups of respective three vertex indices 47 are explicitly listed in the third row below the right diagram in Fig. 6.

By the advanced scheme for generating the cells 25 based on the vertices 49 and based on groups of vertex indices 47, the size of the cells 25 and therefore the resolution of the grid 17 can be changed dynamically. In the present example of Fig. 6, the resolution of the grid 17 is increased by splitting the cells 25-1, 25-2 which are shown on the left side of Fig. 6 and which have almost rectangular shape. By the splitting, the four triangular cells 25-3, 25-4, 25-5 and 25-6 are created which have a smaller area than the original cells 25-1, 25-2, as shown on the right side of Fig. 6. As an alternative, only one of the two cells 25-1, 25-2 as shown on the left side of Fig. 6 may be split into two triangular cells, whereas the other cell 25-1 or 25-2 is left unmodified. That is, three cells 25 are generated from the two cells 25-1, 25-2 (shown on the left side of Fig. 6) by splitting one of these cells only. The prerequisites and conditions for modifying the number of cells 25 - and therefore the resolution of the grid 17 - will be described below.

In Fig. 7, a further variant of the advanced scheme for changing the resolution of the grid 17 is depicted. For this variant, two further vertices labelled by 7 and 8 are introduced in order to split the cell 25-1 vertically, i.e. in longitudinal direction. The coordinates of the additional vertices 7, 8 are determined by interpolating between the existing vertices along the lateral direction (or almost along lateral direction), i.e. as the coordinates of the midpoints between these existing vertices. In detail, the additional vertex 7 is given by the midpoint between the vertices 1 and 4, whereas the coordinates of the vertex 8 are given as the coordinates of the midpoint between the existing vertices 2 and 5.

By this means, the resolution of the grid 17 is locally increased in the area of the cell 25-1 only, whereas the further cell 25-2 is kept unchanged. The motivation for a local modification of the resolution of the grid 17 is illustrated in Fig. 8. A crash barrier 61 is located such that it partly covers the lower cell 25-1 only, but not the upper cell 25-2. The location of the crash barrier 61 is detected via one of the sensors of the detection system 27 of the host vehicle 11 (i.e. by at least one of a visual sensor, a radar system and a Lidar system). If the cells 25 are classified as drivable or non-drivable (as described in context of Fig. 5), the lower cell 25-1 is classified as "non-drivable", whereas the upper cell 25-2 is classified as "drivable". Due to the low resolution of the grid 17 in the area of the crash barrier 61, quite a large area in front of the crash barrier 61 is regarded as non-drivable although a small portion of the lower cell 25-1 is occupied by the crash barrier 61 only.

Therefore, the driving situation in front of the host vehicle 11 can be reflected more realistically by locally increasing the resolution of the grid 17 as shown in Figs. 7 and 8. That is, the further vertices 7, 8 are inserted as described above in order to split the cell 25-1 vertically as shown in the middle diagram of Fig. 8. When classifying the grid cells after increasing the resolution of the grid 17, the cell labelled by "3" is classified as non-drivable cell 58 only since it is partly covered by the crash barrier 61, whereas the cells labelled by "1" and "2" are classified as drivable cells 57. As a result, the total area regarded as drivable is increased by splitting the lower cell 25-1 vertically, and the classification of the cells 25 reflects the actual driving situation more realistically.

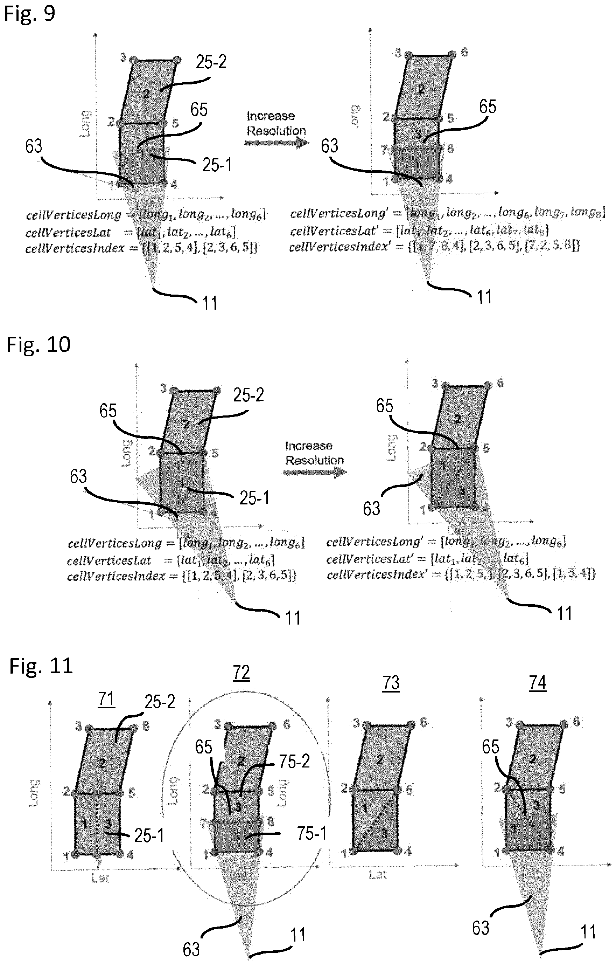

Figs. 9 and 10 depict further variants for changing the resolution of the grid 17 by splitting cells 25 as suitable manner. As shown on the respective left side of Figs. 9 and 10, the lower cell 25-1 is partly covered by a free space 63 in front of the host vehicle 11, wherein a part of the free space is represented by a triangle having an apex at the host vehicle 11 and a basis at a boundary 65 of the free space 63. Since the lower cell 25-1 is not fully covered by the free space 63, this cell 25-1 is classified as non-drivable cell 58. Hence, for the diagrams on the left side of Figs. 9 and 10, the biggest part of the cell 25-1 is wrongly classified as "non-drivable" although it actually belongs to the free space 63. Therefore, a suitable splitting of the cell 25-1 and a corresponding increase of the resolution of the grid 17 will again reflect the actual driving situation in front of the host vehicle 11 more realistically.

As shown on the right side of Fig. 9, two further vertices 7, 8 are inserted in order to split the cell 25-1 horizontally which is obviously the most suitable manner for increasing the resolution of the grid 17. In contrast, for the example of Fig. 10 it is more suitable to split the cell 25-1 diagonally from the top right to the bottom left, as is shown in Fig. 10 on the right side. In both cases, the total area classified as "drivable" will increase due to the splitting of the cell 25-1, i.e. due to the local increase of the resolution of the grid 17.

In Fig. 11, four different types for splitting one of the grid cells 25 are depicted. The split types include vertical splitting 71, horizontal splitting 72, diagonal splitting 73 from top right to bottom left and diagonal splitting 74 from top left to bottom right. In addition, the free space 63 and a part of its boundary 65 are depicted for the horizontal splitting 72 and for the diagonal splitting 74. For each splitting type 71 to 74, it is tested whether the respective splitting will provide a different classification for both portions of the cell after the respective splitting. Before splitting, the cell 25-1 is classified as "non-drivable" since it is covered partly by the free space 63 only.

By the vertical splitting 71 and the two diagonal splittings 73, 74, however, the classification of the respective smaller cells which are labelled by "1" and "3" and which are generated by the splitting will not change. The smaller cells will still be regarded as "non-drivable". In contrast, the horizontal splitting 72 will generate a smaller cell 75-1 which will be classified as "drivable", and another smaller cell 75-2 which will be regarded as "non-drivable". Since the two smaller cells 75-1, 75-2 which are generated by horizontal splitting 72 have different classifications, the horizontal splitting 72 will be regarded as the best split type for the actual situation shown in Fig. 11. Besides, in other situations in which more than one split type appears to be suitable, vertical splitting will have a higher priority since the lateral resolution of the grid 17 is more important than the longitudinal resolution in many cases.

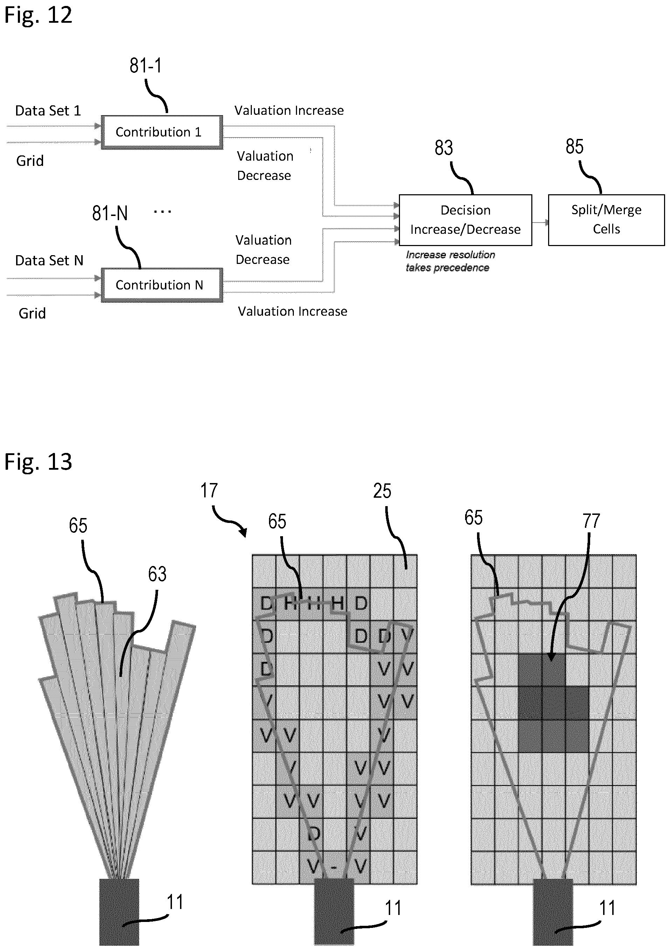

Fig. 12 depicts a schematic diagram for deciding whether the resolution of the grid 17 is to be locally increased or decreased, i.e. whether a part of the cells 25 of the grid 17 (see Figs. 1 and 5) are to be split or to be merged with adjacent cells. First, data sets 1, ..., N are provided and related to the grid 17 having a constant or almost constant resolution so far. The data sets may also be referred to as qualifying data which are received by the detection system 27 of the host vehicle 11. That is, the data sets may rely on measurements performed by the sensors of the detection system 27.

Examples for the data sets which are provided as input types for the method according to the disclosure are listed in table 1 which also includes criteria for increasing and decreasing the resolution of the grid 17 in certain areas with respect to the individual data set or input type. It is noted that a maximum number of cells 25 is predefined for the dynamic grid 17 since the available memory within the computer system 28 is limited. As a consequence, the splitting of cells 25 may be prioritized based on the data sets if the maximum number of cells is going to be exceeded. For example, the cells 25 close to the entities related to one data set (e.g. close to road barriers) may be selected for splitting, while the cells 25 close to entities related to another data set may not be considered and left unmodified.

| Data Set, Input Type | Increase resolution | Decrease resolution |
|---|---|---|
| Free space | Close to the boundary | In the center |
| Road Barriers | Within and on the barrier | Beyond the barrier |
| Static Objects | On side(s) facing the host vehicle | - |
| Object Trails | Around the edges | - |
| Occupancy Grid | At boundaries between different cell classifications | In the center of large patches containing cells having the same classification |
| ... | | |

Since the spatial location of entities belonging to the respective data set are known due to the measurements via the detection system 27, the data sets include coordinates of relevant entities which may require an increase or decrease of the grid resolution. For example, such an entity is the boundary 65 (see Figs. 9 to 11) of the free space 63, or the coordinates of road barriers 53 (see Fig. 5) or obstacles in front of the host vehicle 11.

Since the grid 17 is also defined with respect to the vehicle coordinate system 19 (see Figs. 1 and 2), the respective data set and the grid 17 can be related to each other. In detail, a valuation can be determined for each cell 25 of the grid 17 based on the respective data set 1, ..., N as qualifying data. The valuation based on a weight function for each cell i as follows:

$$w_i = \sum_t w_i^t = C_1/d_i + C_2 * s_i + C_3 * t$$

wherein $d_i$ is the distance between the respective cell i, 25 and the host vehicle 11 (see also Figs. 1 and 5), $s_i$ is a weight

for the respective split type as described above in context of Fig. 11, and t is a weight for the respective data set or input type, for which examples are provided in table 1. $C_1$, $C_2$ and $C_3$ are relative weights for each of these components of the weight function.

Based on this weight function, it is decided whether the resolution of the grid 17 is to be increased locally by splitting the respective cell according to the selected split type which is determined as described in context of Fig. 11, or to be decreased locally by merging the respective cell with at least one adjacent cell. The valuation for increasing or decreasing the resolution of the grid 17 locally at the respective cell 25 is determined at steps 81-1, ..., 81-N for each data set or input type, respectively. At 83, the respective contributions of the different data sets are summarized, i.e. by summing up all valuations of the different data sets, in order to decide whether the respective cell is to be split or to be merged with at least one adjacent cell. Finally, at 85, the respective cell 25 is either modified by splitting or merging, or left unmodified.

For example, assuming the free space 63 as one of the input data sets for the method according to Fig. 12, the valuation based on this data set will "vote" for increasing the resolution of the grid 17 close to the boundaries 65 of the free space 63, i.e. by splitting the respective cells 25 in accordance to one of the split types as shown in Fig. 11, whereas this data set will "vote" for decreasing the resolution of the grid 17, i.e. for merging cells 25, in the center of the free space 63.

This is shown in detail in Fig. 13. On the left side, the free space 63 in front of the host vehicle 11 is shown wherein the free space 63 includes a boundary 65 which is provided e.g. in polar coordinates with respect to the host vehicle 11. In the middle diagram and in the right diagram of Fig. 13, the boundary 65 of the free space 63 is transferred to the dynamic grid 17 in front of the host vehicle 11. The cells 25 of the grid 17 which are denoted by the letters V, H or D are at least slightly in contact with the boundary 65 of the free space 63. Based on the valuation as described before, it is decided that these cells are to be split in order to increase the resolution of the grid 17 close to the boundary 65 of the free space 63. In addition, an individual split type is determined for each cell 25 under a consideration, i.e. for those cells 25 which are slightly in contact with the boundary 65. In detail, cells 25 denoted by V are to be split vertically, cells 25 denoted by H are to be split horizontally, and cells 25 denoted by D are to be split diagonally, i.e. from top left to bottom right or from top right to bottom left, respectively.

In the right diagram of Fig. 13, cells 77 are highlighted which are to be merged in accordance with the decision based on the valuation. As can be recognized, the cells 77 belong to the center of the free space 63 and are not in contact with the boundary 65. Furthermore, these cells 77 are quite far away from the host vehicle 11, i.e. their distance with respect to the host vehicle 11 is greater than for most of the other cells within the boundary 65. It is noted, however, that the splitting of the cells 25 has always a greater priority than the merging of the cells, i.e. in cases where the valuation does not provide a clear "vote" for splitting or merging. Moreover, the cells 77 are merged in lateral direction only in order to avoid the introduction of discretization errors.

In summary, the resolution of the grid 17 in front of the host vehicle 11 is locally increased or decreased in a flexible manner by splitting or merging the respective cells 25. Therefore, the grid 17 can be adapted more accurately to the current driving situation of the host vehicle 11, and due to the adaptation of the resolution of the grid 17 a more reliable basis may be provided for "downstream functions" of driver assistance systems which rely on the grid 17, e.g. for trajectory planning.

Reference numeral list

| | |
|---|---|
| 11 | host vehicle |
| 13 | target vehicle |
| 15 | lane |
| 17 | dynamic grid |
| 19 | vehicle coordinate system |
| 21 | x-axis |
| 23 | y-axis |
| 25, 25-1, ..., 25-6 | cell |
| 27 | detection system |
| 28 | computer system of the host vehicle |
| 29 | left margin of the lane |
| 31 | right margin of the lane |
| 33 | base area |
| 35 | reference line |
| 37 | segment |

| 39 | straight line |
|----|----|
| 41 | section |
| 43 | end points of section |
| 45 | cell indices |
| 47 | vertex indices |
| 49, 49-1, ...,49-4 | vertex |
| 51 | matrix for longitudinal positions |
| 52 | matrix for lateral positions |
| 53 | road barrier |
| 55 | trail or trajectory |
| 57 | drivable cells |
| 58 | non-drivable cells |
| 59 | unknown cells |
| 61 | crash barrier |
| 63 | free space |
| 65 | boundary of free space |
| 71 | vertical splitting |
| 72 | horizontal splitting |
| 73 | diagonal splitting from top right to bottom left |
| 74 | diagonal splitting from top left to bottom right |
| 77 | cells to be merged |
| 81-1, ..., 81-N | cell valuation |
| 83 | decision regarding cell modification |
| 85 | performing cell modification |

**Claims**

1. Computer implemented method for generating a dynamic grid (17) in front of a host vehicle (11), the method comprising:

   detecting an indicator (29, 31) for the course of a lane (15) of a road in front of the host vehicle (11) via a detection system (27) of the host vehicle (11),
   determining, via a computer system (28) of the host vehicle (11), a base area (33) based on the detected indicator (29, 31), the base area (33) being restricted to a region of interest in front of the host vehicle (11),
   defining, via the computer system (28), a plurality of cells (25) by dividing the base area (33) in order to form the dynamic grid (17),
   receiving, via the detection system (27), qualifying data relating to the base area, and
   determining, via the computer system (28), a valuation for each cell (25) based on the qualifying data,

   **characterized by**

   deciding, via the computer system (28), for each cell (25) based on the valuation whether the respective cell (25) is to be split or to be merged with an adjacent cell (25), and
   based on the decision, modifying the respective cell (25) by splitting the cell (25) or by merging the cell (25) with at least one adjacent cell (25) via the computer system (28), or leaving the respective cell (25) unmodified, wherein
   the qualifying data comprises a plurality of data sets,
   each data set provides a contribution (81) to the valuation of the respective cell (25),
   at least one of the data sets includes a classification of the respective cell (25),
   a plurality of split types is defined for the cells (25), one of the split types is selected for the respective cell (25) if two subcells which are generated according to the respective split type have different classifications, and
   the split types comprise vertical splitting (71), horizontal splitting (72), diagonal splitting (73) from top right to bottom left of the respective cell, and diagonal splitting (74) from top left to bottom right.

2. Method according to claim 1, wherein
   the plurality of data sets includes coordinates of at least one of: boundaries (65) of a free space (63), road barriers (53), static objects, object trails (55) and boundaries between different drivability classifications.

**3.** Method according to claim 1 or 2, wherein
the contribution (81) of each data set includes a proposed modification type for the respective cell (25).

**4.** Method according to anyone of claims 1 to 3, wherein
deciding whether the respective cell (25) is to be split or to be merged with an adjacent cell (25) is based on a sum over all available contributions (81) of the data sets.

**5.** Method according to anyone of claims 1 to 4, wherein
the vertical splitting (71) has a higher priority than the other split types (72, 73, 74).

**6.** Method according to anyone of claims 1 to 5, wherein
adjacent cells (25) are merged only if they have the same classification.

**7.** Method according to anyone of claims 1 to 6, wherein
adjacent cells (25) are merged in a lateral direction (21) with respect to the host vehicle (11) only.

**8.** Method according to anyone of claims 1 to 7, wherein
the valuation is based on a distance of the respective cell (25) with respect to the host vehicle (11).

**9.** Method according to anyone of claims 1 to 8, wherein
splitting of the respective cell (25) is selected if the valuation allows for splitting the respective cell (25) and for merging the respective cell (25) with an adjacent cell (25).

**10.** Method according to anyone of claims 1 to 9, wherein

a reference (35) line is defined via the computer system (28) along the lane (15) based on the indicator (29, 31),
the base area (33) is determined on both sides of the reference line (35),
the reference line (35) is divided into segments (37), and
for each of the segments (37), a respective row of cells (25) is defined perpendicularly to the reference line (35).

**11.** System comprising a detection system (27) and a computer system (28), the system being configured to carry out the computer implemented method of at least one of claims 1 to 10.

**12.** Non-transitory computer readable medium comprising instructions for carrying out the computer implemented method of at least one of claims 1 to 10 when the instructions are executed by the system of claim 11.

**Patentansprüche**

**1.** Computerimplementiertes Verfahren zum Erzeugen eines dynamischen Gitters (17) vor einem Host-Fahrzeug (11), wobei das Verfahren umfasst:

Detektieren eines Indikators (29, 31) für den Verlauf einer Fahrspur (15) einer Straße vor dem Host-Fahrzeug (11) mittels eines Detektionssystems (27) des Host-Fahrzeugs (11),
Ermitteln einer Basisfläche (33) basierend auf dem detektierten Indikator (29, 31) mittels eines Computersystems (28) des Host-Fahrzeugs (11), wobei die Basisfläche (33) auf einen interessierenden Bereich vor dem Host-Fahrzeug (11) beschränkt ist,
Definieren mehrerer Zellen (25) mittels des Computersystems (28) durch Teilen der Basisfläche (33), um das dynamische Gitter (17) zu bilden,
Empfangen von Qualifizierungsdaten, die sich auf die Basisfläche beziehen, mittels des Detektionssystems (27) und
Ermitteln einer Bewertung für jede Zelle (25) basierend auf den Qualifizierungsdaten mittels des Computersystems (28),

**gekennzeichnet durch**

Entscheiden, mittels des Computersystems (28), für jede Zelle (25) basierend auf der Bewertung, ob die jeweilige Zelle (25) geteilt werden soll oder mit einer benachbarten Zelle (25) vereinigt werden soll, und

Modifizieren der jeweiligen Zelle (25) basierend auf der Entscheidung, indem mittels des Computersystems (28) die Zelle (25) geteilt wird oder die Zelle (25) mit zumindest einer benachbarten Zelle (25) vereinigt wird, oder Unmodifiziertlassen der Zelle (25), wobei

die Qualifizierungsdaten mehrere Datensätze umfassen, jeder Datensatz einen Beitrag (81) zu der Bewertung der jeweiligen Zelle (25) liefert, zumindest einer der Datensätze eine Klassifizierung der jeweiligen Zelle (25) umfasst, mehrere Teilungstypen für die Zellen (25) definiert werden, wobei einer der Teilungstypen für die jeweilige Zelle (25) ausgewählt wird, wenn zwei Unterzellen, die gemäß dem jeweiligen Teilungstyp erzeugt werden, unterschiedliche Klassifizierungen aufweisen, und die Teilungstypen eine vertikale Teilung (71), eine horizontale Teilung (72), eine diagonale Teilung (73) von oben rechts nach unten links der jeweiligen Zelle und eine diagonale Teilung (74) von oben links nach unten rechts umfassen.

2.  Verfahren nach Anspruch 1, wobei die Datensätze Koordinaten umfassen zumindest eines von: Begrenzungen (65) eines freien Raums (63), Straßenbarrieren (53), statischen Objekten, Objektpfaden (55) und Begrenzungen zwischen unterschiedlichen Fahrbarkeitsklassifizierungen.

3.  Verfahren nach Anspruch 1 oder 2, wobei der Beitrag (81) jedes Datensatzes einen vorgeschlagenen Modifizierungstyp für die jeweilige Zelle (25) umfasst.

4.  Verfahren nach einem der Ansprüche 1 bis 3, wobei das Entscheiden, ob die jeweilige Zelle (25) geteilt oder mit einer benachbarten Zelle (25) vereinigt werden soll, auf einer Summe über alle verfügbaren Beiträge (81) der Datensätze basiert.

5.  Verfahren nach einem der Ansprüche 1 bis 4, wobei die vertikale Teilung (71) eine höhere Priorität als die anderen Teilungstypen (72, 73, 74) aufweist.

6.  Verfahren nach einem der Ansprüche 1 bis 5, wobei benachbarte Zellen (25) nur dann vereinigt werden, wenn sie die gleiche Klassifizierung aufweisen.

7.  Verfahren nach einem der Ansprüche 1 bis 6, wobei benachbarte Zellen (25) nur in einer Querrichtung (21) bezogen auf das Host-Fahrzeug (11) vereinigt werden.

8.  Verfahren nach einem der Ansprüche 1 bis 7, wobei die Bewertung auf einer Distanz der jeweiligen Zelle (25) bezogen auf das Host-Fahrzeug (11) basiert.

9.  Verfahren nach einem der Ansprüche 1 bis 8, wobei das Teilen der jeweiligen Zelle (25) ausgewählt wird, wenn die Bewertung das Teilen der jeweiligen Zelle (25) und das Vereinigen der jeweiligen Zelle (25) mit einer benachbarten Zelle (25) erlaubt.

10. Verfahren nach einem der Ansprüche 1 bis 9, wobei

eine Referenzlinie (35) mittels des Computersystems (28) entlang der Fahrspur (15) basierend auf dem Indikator (29, 31) definiert wird, die Basisfläche (33) auf beiden Seiten der Referenzlinie (35) ermittelt wird, die Referenzlinie (35) in Segmente (37) geteilt wird und für jedes der Segmente (37) eine jeweilige Reihe von Zellen (25) rechtwinklig zu der Referenzlinie (35) definiert wird.

11. System, das ein Detektionssystem (27) und ein Computersystem (28) umfasst, wobei das System ausgebildet ist, das computerimplementierte Verfahren nach zumindest einem der Ansprüche 1 bis 10 auszuführen.

12. Nichtflüchtiges computerlesbares Medium, das Anweisungen zum Ausführen des computerimplementierten Verfahrens nach zumindest einem der Ansprüche 1 bis 10 umfasst, wenn die Anweisungen durch das System nach Anspruch 11 ausgeführt werden.

**Revendications**

1.  Procédé mis en oeuvre par ordinateur pour générer un grille dynamique (17) à l'avant d'un véhicule hôte (11), le procédé comprenant les étapes consistant à :

    détecter un indicateur (29, 31) pour le cours d'une voie (15) d'une route à l'avant du véhicule hôte (11) via un système de détection (27) du véhicule hôte (11),
    déterminer, via un système d'ordinateur (28) du véhicule hôte (11), une zone de base (33) sur la base de l'indicateur (29, 31) détecté, la zone de base (33) étant restreinte à une région d'intérêt à l'avant du véhicule hôte (11),
    définir, via le système d'ordinateur (28), une pluralité de cellules (25) en divisant la zone de base (33) afin de former la grille dynamique (17),
    recevoir, via le système de détection (27) des données de qualification relatives à la zone de base, et
    déterminer, via le système d'ordinateur (28), une évaluation pour chaque cellule (25) sur la base des données de qualification,
    **caractérisé par** les étapes consistant à
    décider, via le système d'ordinateur (28), pour chaque cellule (25) sur la base de l'évaluation, si la cellule (25) respective doit être divisée ou doit fusionner avec une cellule (25) adjacente, et
    sur la base de la décision, modifier la cellule (25) respective en divisant la cellule (25) ou en faisant fusionner la cellule (25) avec au moins une cellule (25) adjacente via le système d'ordinateur (28), ou laisser la cellule (25) respective non modifiée,
    dans lequel
    les données de qualification comprennent une pluralité d'ensembles de données,
    chaque ensemble de données fournit une contribution (81) à l'évaluation de la cellule (25) respective,
    l'un au moins des ensembles de données inclut une classification de la cellule (25) respective,
    une pluralité de types de division sont définis pour les cellules (25),
    l'un des types de division est sélectionné pour la cellule (25) respective si deux sous-cellules qui sont générées en accord avec le type de division respectif ont des classifications différentes, et
    les types de division comprennent une division verticale (71), une division horizontale (72), une division diagonale (73) depuis en haut à droite jusqu'en bas à gauche de la cellule respective, et une division diagonale (74) depuis en haut à gauche jusqu'en bas à droite.

2.  Procédé selon la revendication 1, dans lequel
    la pluralité d'ensembles de données inclut des coordonnées d'au moins un élément parmi : des limites (65) d'un espace libre (63), des barrières routières (53), des objets statiques, des pistes d'objets (55) et des limites entre différentes classifications de conduite.

3.  Procédé selon la revendication 1 ou 2, dans lequel
    la contribution (81) de chaque ensemble de données inclut un type de modification proposé pour la cellule (25) respective.

4.  Procédé selon l'une quelconque des revendications 1 à 3, dans lequel l'étape consistant à décider s'il faut diviser ou faire fusionner la cellule (25) respective avec une cellule (25) adjacente est basée sur une somme de l'ensemble des contributions (81) disponibles des ensembles de données.

5.  Procédé selon l'une quelconque des revendications 1 à 4, dans lequel la division verticale (71) a une priorité plus élevée que les autres types de division (72, 73, 74).

6.  Procédé selon l'une quelconque des revendications 1 à 5, dans lequel des cellules (25) adjacentes fusionnent uniquement si elles ont la même classification.

7.  Procédé selon l'une quelconque des revendications 1 à 6, dans lequel des cellules (25) adjacentes fusionnent dans une direction latérale (21) par rapport au véhicule hôte (11) uniquement.

8.  Procédé selon l'une quelconque des revendications 1 à 7, dans lequel l'évaluation est basée sur une distance de la cellule (25) respective par rapport au véhicule hôte (11).

9.  Procédé selon l'une quelconque des revendications 1 à 8, dans lequel l'étape consistant à diviser la cellule (25) respective est sélectionnée si l'évaluation permet une division de la cellule (25) respective et une fusion de la cellule (25) respective avec une cellule (25) adjacente.

10. Procédé selon l'une quelconque des revendications 1 à 9, dans lequel

une ligne de référence (35) est définie via le système d'ordinateur (28) le long de la voie (15) sur la base de l'indicateur (29, 31),
la zone de base (33) est déterminée sur les deux côtés de la ligne de référence (35),
la ligne de référence (35) est divisée en segments (37), et
pour chacun des segments (37), une rangée respective de cellules (25) est définie perpendiculairement à la ligne de référence (35).

11. Système comprenant un système de détection (27) et un système d'ordinateur (28), le système étant configuré pour effectuer le procédé mis en oeuvre par ordinateur selon l'une au moins des revendications 1 à 10.

12. Support non transitoire lisible par ordinateur comprenant des instructions destinées à effectuer le procédé mis en oeuvre par ordinateur selon l'une au moins des revendications 1 à 10 quand les instructions sont exécutées par le système selon la revendication 11.

Fig. 1

Fig. 2

Fig. 3

Fig. 4

51

cellPosLong =

| 6.4 | 6.2 | 6.0 | 5.8 | 5.6 |
| 5.4 | 5.2 | 5.0 | 4.8 | 4.6 |
| 4.4 | 4.2 | 4.0 | 3.8 | 3.6 |
| 3.4 | 3.2 | 3.0 | 2.8 | 2.6 |
| 2.4 | 2.2 | 2.0 | 1.8 | 1.6 |
| 1.4 | 1.2 | 1.0 | 0.8 | 0.6 |
| 0 | 0 | 0 | 0 | 0 |

52

cellPosLat =

| -0.8 | 0.2 | 1.2 | 2.2 | 3.2 |
| -1.0 | 0 | 1.0 | 2.0 | 3.0 |
| -1.2 | -0.2 | 0.8 | 1.8 | 2.8 |
| -1.4 | -0.4 | 0.6 | 1.6 | 2.6 |
| -1.6 | -0.6 | 0.4 | 1.4 | 2.4 |
| -1.8 | -0.8 | 0.2 | 1.2 | 2.2 |
| -2 | -1 | 0 | 1 | 2 |

19

23

49-4

25

49-3

3.0
2.8

2.0
1.8

49-1

49-2

0.4 0.6 1.4 1.6

H

21

11

Fig. 5

Fig. 6

$$cellVerticesLong = [long_1, long_2, ..., long_6]$$
$$cellVerticesLat = [lat_1, lat_2, ..., lat_6]$$
$$cellVerticesIndex = \{[1,2,5,4],[2,3,6,5]\}$$

$$cellVerticesLong = [long_1, long_2, ..., long_6]$$
$$cellVerticesLat = [lat_1, lat_2, ..., lat_6]$$
$$cellVerticesIndex = \{[1,2,5],[1,5,4],[2,3,6],[2,6,5]\}$$

Fig. 7

Insert cell

$$cellVerticesLong = [long_1, long_2, ..., long_6]$$
$$cellVerticesLat = [lat_1, lat_2, ..., lat_6]$$
$$cellVerticesIndex = \{[1,2,5,4],[2,3,6,5]\}$$

$$cellVerticesLong' = [long_1, long_2, ..., long_6, long_7, long_8]$$
$$cellVerticesLat' = [lat_1, lat_2, ..., lat_6, lat_7, lat_8]$$
$$cellVerticesIndex' = \{[1,2,8,7],[2,3,6,5],[7,8,5,4]\}$$

Fig. 8

## Fig. 9

$$cellVerticesLong = [long_1, long_2, ..., long_6]$$
$$cellVerticesLat = [lat_1, lat_2, ..., lat_6]$$
$$cellVerticesIndex = \{[1, 2, 5, 4], [2, 3, 6, 5]\}$$

Increase Resolution

$$cellVerticesLong' = [long_1, long_2, ..., long_6, long_7, long_8]$$
$$cellVerticesLat' = [lat_1, lat_2, ..., lat_6, lat_7, lat_8]$$
$$cellVerticesIndex' = \{[1, 7, 8, 4], [2, 3, 6, 5], [7, 2, 5, 8]\}$$

## Fig. 10

$$cellVerticesLong = [long_1, long_2, ..., long_6]$$
$$cellVerticesLat = [lat_1, lat_2, ..., lat_6]$$
$$cellVerticesIndex = \{[1, 2, 5, 4], [2, 3, 6, 5]\}$$

Increase Resolution

$$cellVerticesLong' = [long_1, long_2, ..., long_6]$$
$$cellVerticesLat' = [lat_1, lat_2, ..., lat_6]$$
$$cellVerticesIndex' = \{[1, 2, 5], [2, 3, 6, 5], [1, 5, 4]\}$$

## Fig. 11

## Fig. 12

81-1

Data Set 1 → Contribution 1 → Valuation Increase

Grid

Valuation Decrease

81-N · · ·

Data Set N → Contribution N → Valuation Decrease

Grid → Valuation Increase

83

Decision Increase/Decrease

*Increase resolution takes precedence*

85

Split/Merge Cells

## Fig. 13

65

63

11

17

65

25

D H H H D
D       D D V
D           V V
V           V V
V V         V
  V       V V
V V       V V
    D     V
    V - V

11

65

77

11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20150353083 A1

**Non-patent literature cited in the description**

• Efficient Automotive Grid Maps using a Sensor Ray based Refinement Process. **JUNGNICKEL, R. et al.** 2016 IEEE Intelligent Vehicles Symposium (IV). IEEE, 19 June 2016, 668-675